# EUROPEAN PATENT APPLICATION

(11) **EP 4 501 611 A1**
(43) Date of publication of application: **05.02.2025**
(21) Application number: 23306332.0
(22) Date of filing: 03.08.2023
(51) Int. Cl.: B29D 11/00, B23K 26/361, B41M 5/24

(54) **METHOD FOR ENGRAVING AN OPHTHALMIC DEVICE**

(71) Applicant: Essilor International, 94220 Charenton-Le-Pont (FR)
(72) Inventor: SOFFIATTI, Florian, 94800 VILLEJUIF (FR); GIRARD, Stélie, 75014 PARIS (FR); MOISSET, Charles, 75014 PARIS (FR); GED, Guillaume, 78180 MONTIGNY LE BRETONNEUX (FR); MARTIN, Joseph, 91230 MONTGERON (FR)
(74) Representative: Santarelli

(57) **Abstract**

The disclosure relates to a method for engraving an ophthalmic device, comprising: providing a photo-ablation device configured to engrave at least one face of the ophthalmic device; providing a marking pattern to be engraved on the at least one face of the ophthalmic device thanks to the photo-ablation device; and determining a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern.

## Description

### FIELD OF THE DISCLOSURE

The disclosure relates to a method for engraving an ophthalmic device.

The disclosure further relates to a command and control unit including system elements configured to run a computer program in order to implement at least some steps of said method.

The disclosure also relates to a manufacturing system configured for carrying out at least some steps of said method, and to a computer program including instructions configured to implement at least some steps of said method, when said computer program is run by a computer.

The disclosure further relates to a client-server communication interface for transferring to a remote computer at least some data determined by a computer program that implements at least some steps of said method, when said computer program is run in a command and control unit, the remote computer implementing the other steps of said method.

### BACKGROUND ART

Many methods for engravings ophthalmic devices are already known.

The engraving can be done in order to apply markings, permanent and/or temporary, for functional issues such as positioning of the ophthalmic device and/or for commercial issues,

For example, processes for marking by removal of material are known. Such processes are configured to act on the surface of one face of the lens and to remove therefrom a small amount of material with pulses of a laser ray. Specifically, a marking is generally formed of a series of points (or spots), each spot being produced by one or more pulses of the laser.

The laser-marking machines thus produce deformations in the material on the face of this ophthalmic device. The deformations are sensitive to thermal stresses that the ophthalmic device may be subjected to subsequent to the production of these markings.

In this respect, European patent EP 3 013 594 discloses a process for manufacturing an ophthalmic lens comprising a laser-marking step for producing permanent engravings on a surface of the ophthalmic lens, at least one predetermined step subsequent to the laser-marking step and implementing severe thermal stresses that are applied to the surface and a step of determining an operating point of a laser-marking machine configured to implement the laser-marking step based on geometric characteristics of the engravings to be produced on the surface, the step of determining the operating point including the following steps:
- determining a value representative of the deformation of the ophthalmic lens in at least one treatment zone of the surface in which the engravings are produced, from the severe thermal stresses and from data relating to a predetermined material from which the ophthalmic lens is formed; and
- deducing the operating point from the value representative of the deformation of the ophthalmic lens in the at least one treatment zone and from the geometric characteristics of the engravings;

the step of determining the operating point comprising the following steps:
   - deducing a post-marking stress level from the value representative of the deformation of the ophthalmic lens and the geometric characteristics of the engravings; and
   - selecting the operating point on the basis of the difficulty level, of geometric characteristics of the surface of the ophthalmic lens to be marked and of parameters specific to the laser-marking machine used;
wherein the post-marking stress level is chosen from a plurality of post-marking stress levels predetermined as a function of predetermined ranges of geometric engraving characteristics and predetermined ranges of values representative of the deformation of the ophthalmic lens.

Furthermore, European patent EP 3 046 719 discloses a process for marking an ophthalmic lens produced from at least one predetermined material, the process being implemented by a device including a laser configured to emit a focused pulsed beam of ultraviolet laser radiation and an optical assembly that includes: an energy attenuator configured to regulate a fluence of the beam of ultraviolet radiation focused on a surface of the ophthalmic lens to be marked according to a plurality of operating modes of the attenuator, which modes each define a determined fluence value; an F-theta lens located at the output of the optical assembly and configured to focus a beam of ultraviolet laser radiation onto a focal plane of the F-theta lens with a focused beam diameter in the focal plane of the order of about 20 µm to about 50 µm; and an afocal system placed between the laser source and the attenuator; and the process includes a step of laser marking permanent engravings on the ophthalmic lens, which marking step includes a step of emitting a focused pulsed beam of ultraviolet laser radiation having at least the following parameters a radiation wavelength comprised between 200 nm and 300 nm, a pulse duration comprised between about 0.1 ns and about 5 ns; an energy per pulse comprised between about 5 µJ and about 100 µJ.

### SUMMARY OF THE DISCLOSURE

The disclosure is directed to a method for engraving an ophthalmic device of the type disclosed above, which is easy and convenient to implement and which allows to ensure a good productivity of the engraving method and a good quality of the engraved ophthalmic devices.

The disclosure accordingly provides, according to a first aspect, a method for engraving an ophthalmic device, comprising the steps of providing a photo-ablation device configured to engrave at least one face of the ophthalmic device; providing a marking pattern to be engraved on the at least one face of the ophthalmic device thanks to the photo-ablation device; and determining a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern.

Thanks to the method according to the disclosure, features of the marking pattern, the photo-ablation device and the ophthalmic device to be engraved are all taken into account for determining not only a global kinematics but both marking pattern kinematics and engraving kinematics.

The marking pattern kinematics may be representative to lines, also called clusters, to form the marking pattern, while the engraving kinematics may be representative to the photo-ablation parameters in order to engrave the so-called lines and clusters in order to perform the marking pattern, both being operationally linked.

The marking pattern kinematics may be useful to ensure a good quality of the engraved ophthalmic device, while the engraving kinematics may be useful to ensure a good productivity, both providing a very efficient engraving method.

Advantageous and convenient features of the engraving method are described below.

The geometrical characteristics of the at least one face of the ophthalmic device to be engraved is a curvature value.

The operational parameters of the photo-ablation device are a range of power of use, a focal point, a defocus threshold.

The geometrical characteristics of the marking pattern are a final shape, a number of laser-impacts and pitch between the laser-impacts.

The operational parameters of the photo-ablation device are also a shape and a size of a spot defining the laser-impacts, and the pitch between the laser-impacts can be determined as a function of the shape and the size of the spot of the photo-ablation device.

The at least one face of the ophthalmic device is divided into a limited number of distinct at least partially annular zones, such as for instance rings, defined depending on the curvature value and the engraving kinematics is determined such that on each of at least partially annular zones, the photo-ablation device is configured to focus at a focal point, including positively and/or negatively the defocus threshold.

The engraving kinematics is determined such that the marking pattern is engraved by the photo-ablation device at least partially zones by zones, for instance in a determined order.

The at least partially annular zones can be circular, annular, semi-annular, ellipsoidal or even more complexes shapes.

The at least partially annular zones are distinct in that the focal point of the photo-ablation device changes between each zone but is fixed relative to a respective zone even if the zone extends completely annularly.

The engraving kinematics is also determined depending on a number of pass to engrave the marking pattern.

The engraving kinematics may also be determined such that the marking pattern is engraved by the photo-ablation device from a most external zone to a most internal zone, that is to say from an outside of the ophthalmic device to a center of the ophthalmic device; or inversely, the engraving kinematics may also be determined such that the marking pattern is engraved by the photo-ablation device from a most internal zone to a most external zone, that is to say from the center of the ophthalmic device to the outside of the ophthalmic device; or the engraving kinematics may also be determined such that the marking pattern is engraved by the photo-ablation device in a determined order different to the previous orders.

In addition, the engraving kinematics may also be determined based on a gradient of power of use when the photo-ablation device changes of zone.

The marking pattern kinematics is determined such that the marking pattern comprises at least some clusters which extend continuously one to each other.

The marking pattern kinematics is determined such that at least some part of clusters are defined by a regular pitch between a determined number of laser-impacts.

The operational parameters of the photo-ablation device are also a shape and a size of a spot defining the laser-impacts, and the regular pitch between the determined number of laser-impacts can be determined as a function of the shape and the size of the spot of the photo-ablation device.

The engravings kinematics is determined such that the continuous clusters are at least partially engraved successively in the range of power of use.

In other words, the marking pattern kinematics can be determined also as a function of a gradient of power of use of the photo-ablation device.

The marking pattern kinematics and engraving kinematics are also determined to find a compromise between quality of the engraved marking pattern and cycle time to engrave the at least one face of the ophthalmic device.

The method further comprises the step of engraving the marking pattern thanks to the photo-ablation device and according to the determined marking pattern kinematics and engraving kinematics.

The marking pattern is engraved on a local area on the at least one face of the ophthalmic device.

The marking pattern is engraved on a major area on the at least one face of the ophthalmic device.

The marking pattern comprises at least one commercial marking, and/or at least one decorative marking, such as for instance a logo.

The marking pattern comprises at least one functional marking for manufacturing the ophthalmic device, such as positioning circles.

The marking pattern comprises at least one optical marking, such as micro-structures for preventing myopia.

The micro-structures may form a plurality of diffusion zones on the ophthalmic device.

It is to be noted that the ophthalmic device can be made from a substrate and one or a plurality of coatings deposited on at least one face of the substrate. The marking pattern may be engraved directly on the substrate, including into the substrate, and/or below the coatings, and/or in the coatings.

The disclosure also provides, according to a second aspect, a command and control unit including system elements configured to run a computer program in order to implement at least some of the steps of providing a photo-ablation device configured to engrave at least one face of the ophthalmic device; providing a marking pattern to be engraved on the at least one face of the ophthalmic device thanks to the photo-ablation device; and determining a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern.

The disclosure also provides, according to a third aspect, a manufacturing system comprising a photo-ablation device for engraving the ophthalmic device and a command and control unit, the system being configured for carrying out at least some of the steps of providing a marking pattern to be engraved on the at least one face of the ophthalmic device thanks to the photo-ablation device; and determining a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern; and optionally engraving the marking pattern on the at least one face of the ophthalmic device.

The disclosure also provides, according to a fourth aspect, to a computer program including instructions configured to implement at least some of the steps of providing a photo-ablation device configured to engrave at least one face of the ophthalmic device; providing a marking pattern to be engraved on the at least one face of the ophthalmic device thanks to the photo-ablation device; and determining a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern, when the computer program is run by a computer.

The disclosure also provides, according to a fifth aspect, a client-server communication interface to be used for carrying out a method for engraving an ophthalmic device, comprising the steps of providing a photo-ablation device configured to engrave at least one face of the ophthalmic device; providing a marking pattern to be engraved on the at least one face of the ophthalmic device thanks to the photo-ablation device; and determining a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern; the client-server communication interface being configured for transferring to a remote computer at least some data, such as a marking pattern kinematics and an engraving kinematics determined, which are determined by a computer program that implements at least some steps of the method, when the computer program is run in a command and control unit, the remote computer implementing the other steps the method.

### BRIEF DESCRIPTION OF THE DRAWINGS

The description of the disclosure now continues with a detailed description of advantageous embodiments given hereinafter by way of nonlimiting example and with reference to the appended drawings.
Figure 1 schematically depicts a manufacturing system comprising a photo-ablation device and a command and control unit, configured to carry out steps of a method for engraving an ophthalmic device, according to the disclosure.
Figure 2 diagrammatically shows a client-server communication interface comprising system parts configured for transferring at least some data, such as a marking pattern kinematics and an engraving kinematics determined by the method according to the disclosure, to a remote data processing system.
Figure 3 is a block diagram illustrating main operating steps of the method for engraving an ophthalmic device obtained thanks to the manufacturing system and/or to the client-server communication interface illustrated in Figures 1 and 2.
Figure 4 is a block diagram illustrating more detailed operating steps of the method for engraving an ophthalmic device illustrated in Figure 3.
Figure 5a is a top view of an ophthalmic device divided into rings and comprising a marking pattern formed by micro-circles locally located on several rings.
Figure 5b is a top view of an ophthalmic device divided into rings and comprising a marking pattern formed by a logo extending on several rings.
Figure 6 shows in section the ophthalmic device having rings like in Figures 5a and 5b on which is focused a laser beam.
Figure 7 is similar to Figure 6, showing the laser beam at a nominal focal point and with a defocus threshold.
Figure 8 schematic examples of continuous clusters to form a marking pattern to be engraved.
Figure 9 shows a detail of one of the examples of Figure 8.
Figure 10 shows a marking of a marking pattern engraved thanks to the method according to the disclosure.

### DETAILED DESCRIPTION OF EXAMPLE EMBODIMENTS

The disclosure is directed to a method for engraving an ophthalmic device which allows to ensure a good productivity of the engraving method and a good quality of the engraved ophthalmic devices .

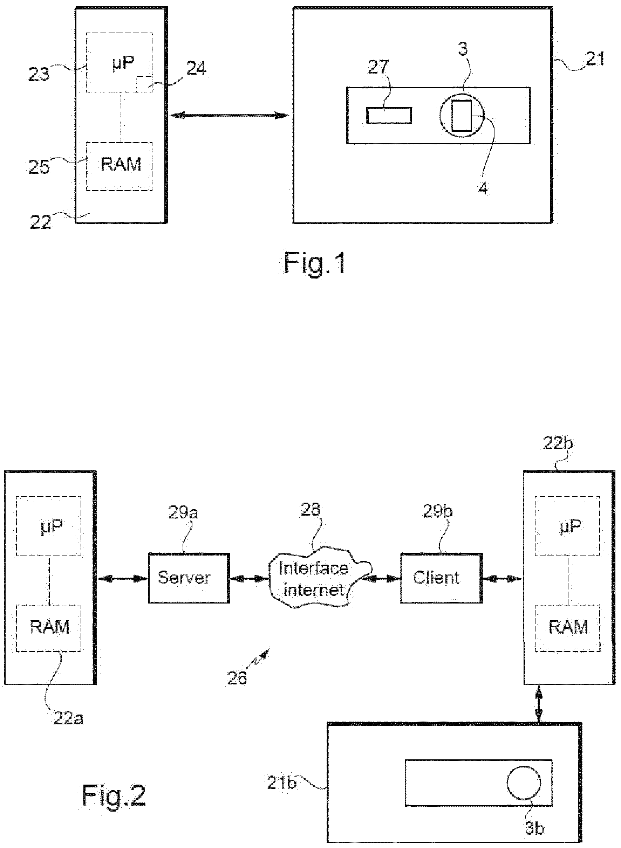

Figure 1 illustrates a manufacturing system configured to carry out the engraving of a marking pattern on the ophthalmic device, according to a determined kinematics.

The system may comprises a manufacturing machine 21 and system parts generally formed by at least one command and control unit 22 configured to communicate with a data processing system (or control unit) of the machine 21 and configured to run a computer program having instructions configured to implement at least the engraving step of the method, when said computer program is run by a computer.

The machine 21 is here a numerical-control machine, numerical control denoting the set of equipment and software, the function of which is to give movement instructions to all the elements of the machine.

The machine 21 comprises a photo-ablation device 27 having at least a laser, a data processing system or a control unit (not shown) configured for controlling the photo-ablation device 27.

The laser of the photo-ablation device 27 is mounted on an arm, which is for instance movable but not necessary.

The photo-ablation device 27 can for instance comprise a laser module, a scanning head module receiving a laser beam emitted by the laser module and a focal lens module focusing the laser beam re-emitted by the scanning head module towards the ophthalmic device 3 to be engraved by photo-ablation.

The command and control unit 22 comprises a microprocessor 23 having a memory 24, in particular a non-volatile memory, allowing it to load and store the computer program, also called software, which when it is executed in the microprocessor 23, allows the implementation of method according to the disclosure.

This non-volatile memory 24 is for example of the ROM ("read only memory") type.

The command and control unit 22 further comprises a memory 25, in particular a volatile memory, allowing data to be stored during the execution of the software and the implementation of the method.

This volatile memory 25 is for example of the RAM or EEPROM type (respectively "random access memory" and "electrically erasable programmable read only memory").

The command and control unit may be only at least partially integrated into the machine. In other words, the control unit may be arranged in part, or in whole, outside the machine.

The command and control unit can form at least partially a part of the machine and may comprise one or a plurality of command and control modules located inside and/or outside the machine.

The machine 21 is here configured to engrave by photo-ablation a marking pattern 4 on at least one face of a substrate 3 according to a determined kinematics in order to form the ophthalmic device.

The command and control unit 22 is configured to command and control at least some of the steps of the engraving method described below.

The substrate can be the ophthalmic device or, in variant, the substrate is not the ophthalmic device as such but rather a mold part which is then used for manufacturing the ophthalmic device.

Figure 2 shows a client-server communication interface 26 comprising for instance a so-called supplier side 29a and another, so-called client side 29b, and these two sides communicating via an internet interface 28.

The supplier side comprises a server 29a linked to a data processing system or a command and control unit 22a of the same type as that in Figure 1, this server 29a being configured to communicate with the internet interface 28.

The client side 29b is configured to communicate with the internet interface 28, and is linked to a data processing system or a command and control unit 22b of the same type as that of the supplier side.

Further, the command and control unit 22b on the client-side is linked to a manufacturing machine 21b of the same type as that in Figure 1 for engraving at least a first face 3b of the ophthalmic substrate 3.

For instance, the command and control unit 22b on the client-side is configured for receiving by a user some parameters about photo-ablation device and/or about the marking pattern, and about the engraving method, such as the kinematics, intended to be implemented for engraving the ophthalmic device.

For instance, the parameters are parameters amongst geometrical characteristics of the at least one face of the ophthalmic device to be engraved, operational parameters of the photo-ablation device, and/or geometrical characteristics of the marking pattern.

In particular, the geometrical characteristics of the at least one face of the ophthalmic device to be engraved can be a curvature value; the geometrical characteristics of the marking pattern can be a final shape, a number of laser-impacts and pitch between the laser-impacts; the operational parameters of the photo-ablation device can be a range of power of use, a nominal focal point, a defocus threshold, a shape and a size of a spot defining the laser-impacts.

To be noted that the pitch between the laser-impacts can be determined as a function of the shape and the size of the spot of the photo-ablation device.

The command and control unit 22b on the client-side, using the internet 28 and server 29a interface, sends the data received to the command and control unit 22a on the supplier-side for the determination of the manufacturing file and operational parameters, in particular the kinematics to engrave the marking pattern.

The command and control unit 22a on the supplier-side executes the computer program that it contains in order to determine the kinematics to engrave the marking pattern.

In particular, as explained below, the kinematics here includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern.

In particular, the marking pattern kinematics may be representative to lines, also called clusters, to form the marking pattern, while the engraving kinematics may be representative to the photo-ablation parameters in order to engrave the so-called lines and clusters in order to perform the marking pattern, both being operationally linked (see in detail below).

Using the server 29a and the internet interface 28, the command and control unit 22a on the supplier-side sends the manufacturing file and operational parameters, namely the determined kinematics to engrave the marking pattern.

The command and control unit 22b on the client side is here configured to execute software for implementing the other steps of the method for engraving the ophthalmic device using the manufacturing file and operational parameters thanks to the manufacturing system 21b, namely the engraving of the ophthalmic device.

In variant, a step of determining the kinematics can be carried out by the command and control unit 22b on the client side.

In another variant, the manufacturing system can be located on the supplier side so that the command and control unit 22a on the supplier side is further configured to machine the ophthalmic surface.

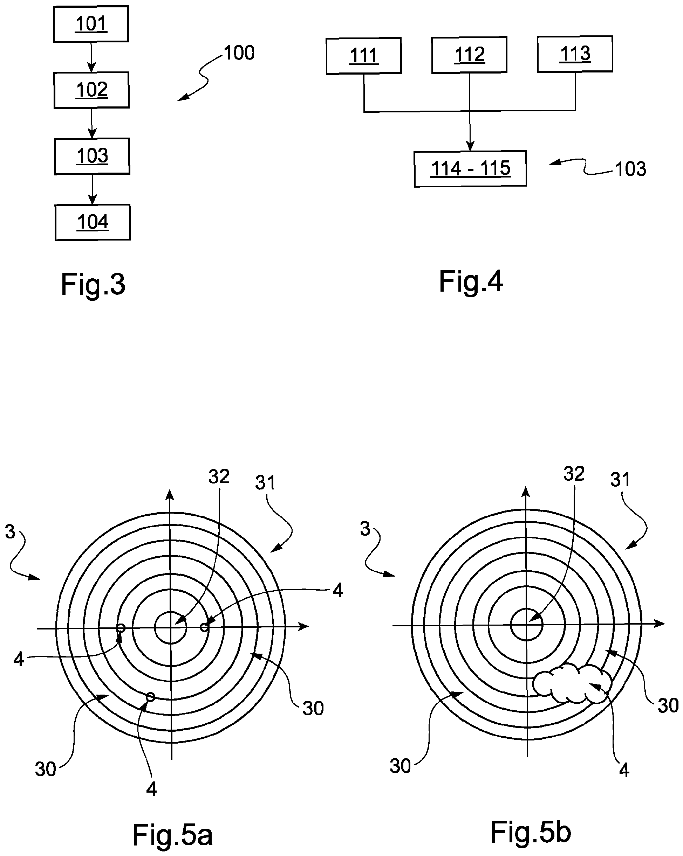

Figure 3 shows steps for engraving 100 at least a face of the ophthalmic device and/or a machined mold for making the ophthalmic device, thanks to the photo-ablation device and/or to the client-server communication interface illustrated in Figures 1 and 2.

The method comprises a step of providing 101 the photo-ablation device configured to engrave the face of the ophthalmic device 3, the step of providing 102 the marking pattern 4 to be engraved on the face of the ophthalmic device 3 thanks to the photo-ablation device 27, and the step of determining 103 the kinematics to engrave the marking pattern 4 on the face of the ophthalmic device 3.

The method comprises a step of engraving 104 the marking pattern 4 thanks to the photo-ablation device 27 and according to the determined kinematics.

It is to be noted that the ophthalmic device can be made from a substrate and one or a plurality of coatings deposited on at least one face of the substrate. The marking pattern 4 may be engraved directly on the face and/or into the substrate, and/or below the coatings, and/or in the coatings.

The marking pattern 4 can be engraved either on a local area on face of the ophthalmic device 3, or on a major area on the face of the ophthalmic device 3.

The marking pattern 4 may comprise at least one commercial marking and/or decorative marking, such as logo, and/or at least one functional marking for manufacturing the ophthalmic device, such as positioning circles, and/or at least one optical marking, such as micro-structures for preventing myopia, which micro-structures forming a plurality of diffusion zones on the ophthalmic device 3.

Figure 4 shows in more detail the step of determining 103 the kinematics to engrave the marking pattern 4 on the face of the ophthalmic device 3.

In particular, the kinematics includes a marking pattern kinematics and an engraving kinematics, both being defined as a function of at least one parameter amongst geometrical characteristics of the face of the ophthalmic device 3 to be engraved, operational parameters of the photo-ablation device 21, and geometrical characteristics of the marking pattern 4.

In this respect, the method comprises the step of providing 111 a curvature value of the face of the ophthalmic device 3 to be engraved.

The method further comprises the step of providing 112 at least one of a final shape of the marking pattern 4, a number of laser-impacts to make the marking pattern 4 and a pitch either between the laser-impacts of the marking pattern 4 or between successive sets of the determined number of laser-impacts.

The method further comprises the step of providing 113 at least one of a range of power of use of the photo-ablation device 27, a nominal focal point of the photo-ablation device 27, a defocus threshold of the photo-ablation device 21, a shape and a size of a spot defining the laser-impacts of the photo-ablation device 21.

A number of pass to engrave the marking pattern 4 thanks to the photo-ablation device 27 can be determined or provided, depending for instance on a material of the ophthalmic device 3, number of laser-impacts to make the marking pattern 4, power of use of the photo-ablation device 27 etc.

According to a first embodiment, the engraving kinematics is determined such that the marking pattern is engraved by the photo-ablation device 21 at least partially zones by zones on the face of the ophthalmic device 3.

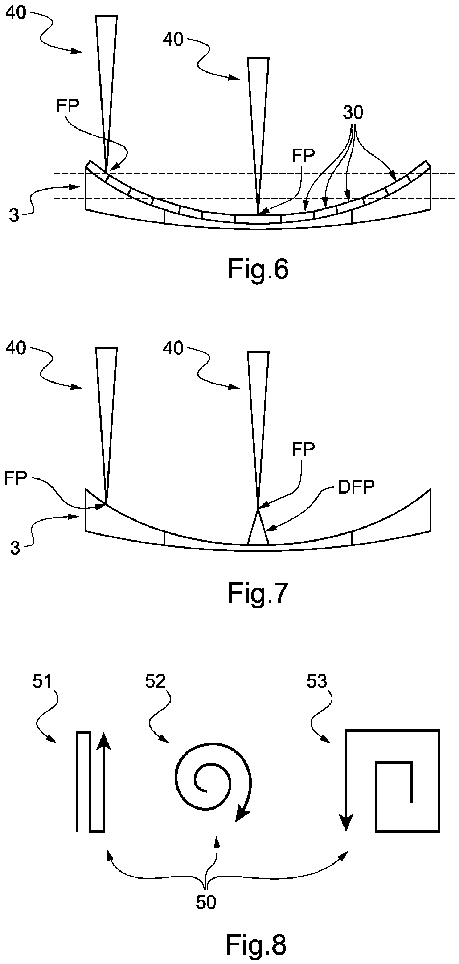

In particular, as shown in Figures 5a, 5b and 6, the ophthalmic device 3 is divided into a limited number of distinct at least partially annular zones, here formed by rings 30, defined depending on the curvature value.

The at least partially annular zones are here annular, but can be semi-annular, circular, ellipsoidal or may have more complexes shapes.

The marking pattern 4 can extend on a single ring 30 or can extend on a plurality of rings 30.

In particular, Figure 5a shows several rings 30 and a marking pattern 4 formed here by several micro-circles locally located on the ophthalmic device 3 and extending each either on a single ring or on adjacent rings; whereas Figure 5b shows several rings 30 and a marking pattern 4 formed here by a logo extending on several rings 30.

The engraving kinematics is determined such that on each of rings 30, the photo-ablation device 27 is configured to focus a beam of light 40 at a dedicated nominal focal point referenced FP (see Figures 6 and 7), including positively and/or negatively the defocus threshold referenced DFP (see Figure 7), depending on the distance between the photo-ablation device 27 and the ring 30 of the ophthalmic device 3 which is photo-ablated.

In other words, using the photo-ablation device 27 both at a dedicated nominal focal point FP with a defocus threshold DFP for at least some laser-impacts makes is possible to divide the ophthalmic device 3 into a limited number of rings 30.

The photo-ablation device 27 can be movable relative to a vertical axis and/or to a horizontal axis.

Figure 6 clearly shows that the dedicated nominal focal point FP is adapted depending on the ring 30 which is focused.

In particular, the dedicated nominal focal point FP can be controlled thanks to a vertical displacement of the photo-ablation device 27 and/or thanks to the focal lens module of the photo-ablation device 27, depending on the determined ring 30 of the ophthalmic device 3 which is photo-ablated towards which the beam of light 40 is focused.

In other words, the dedicated nominal focal point FP can be controlled mechanically and/or optically.

It is to be noted that the engraving kinematics may also be determined such that the marking pattern 4 is engraved by the photo-ablation device 27 from a most external ring 30 to a most internal ring 30, that is to say from the outside 31 of the ophthalmic device 3 to the center 32 of the ophthalmic device 3.

Inversely, the engraving kinematics may also be determined such that the marking pattern 4 is engraved by the photo-ablation device 27 from a most internal ring 30 to a most external ring 30, that is to say from the center 32 of the ophthalmic device 3 to the outside 31 of the ophthalmic device 3.

In variant, the engraving kinematics may also be determined such that the marking pattern 4 is engraved by the photo-ablation device 27 in a determined order different to the previous orders.

In addition, the engraving kinematics may also be determined based on a gradient of power of use when the photo-ablation device 27 changes of ring 30.

Said otherwise, the engraving kinematics may also be determined so as to compensate the fact that the power of use of the photo-ablation device 27 varies between two rings.

This is due to the fact that between two successive rings 30, the photo-ablation device 21 is temporarily stopped in order to adapt the dedicated nominal focal point; while when the photo-ablation device 27 performs marking pattern 4 on determined ring 30, the photo-ablation device 27 can be moved along the ring 30 in a respective horizontal plane (illustrated in dashed lines in Figures 6 and 7) without changing the power of use of the photo-ablation device 27.

According to a second embodiment, which can be combined with the first embodiment, the marking pattern kinematics is determined such that the marking pattern 4 comprises at least some clusters 50 which extend continuously one to each other.

It is to be noted that the definition of the marking pattern 4 is here representative of the marking pattern kinematics, that is to say the instructions given to the command and control unit 22 of the manufacturing machine 21.

Figure 8 illustrates schematic examples of continuous clusters 50, made respectively, from the left to the right, by a continuous line shape 51 rather than distinct lines, by a continuous rounded spiral shape 52 rather than two distinct circles lines, and by a continuous no-rounded spiral shape 53 rather than two distinct rectangular lines.

In any case, the continuous shapes are performed thanks to a determined number of laser-impacts emitted by the photo-ablation device 27.

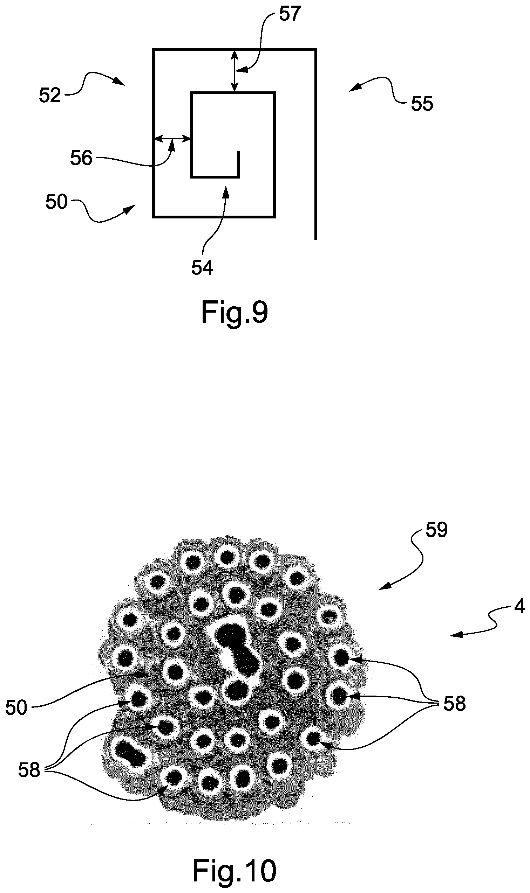

It is also to be noted, in reference to Figure 9, that the continuous no-rounded spiral shape 53 can be made thanks to a first rectangular line portion 54 and a second rectangular line portion 55 extending from and at least partially around the first rectangular line portion 54.

The clusters 50 can be defined according to a determined number of laser-impacts which are remote from each other at a regular pitch.

The regular pitch between the determined number of laser-impacts can also be determined as a function of the shape and the size of the spot of the photo-ablation device 27.

In particular, as shown in Figure 9, the marking pattern kinematics can also be determined such that at least some part of clusters are defined by pitch 56, 57, between numbers of laser-impacts, each number of laser-impacts corresponding here to a line of the cluster.

The pitch between the numbers of laser-impacts can be determined as a function of the shape and the size of the spot of the photo-ablation device 27.

The pitch can also be determined between successive individual laser-impacts, as a function of the operational parameters of the photo-ablation device 27.

Based on the above, the engravings kinematics can be determined such that the continuous clusters 50 are at least partially engraved successively in the range of power of use of the photo-ablation device 27.

In other words, the marking pattern kinematics can be determined also as a function of a gradient of power of use of the photo-ablation device 27, especially when the photo-ablation device 27 is moved from a ring to another ring.

It is to be noted that the marking pattern kinematics and engraving kinematics are also determined to find a compromise between quality of the engraved marking pattern 4 and cycle time to engrave the ophthalmic device 3.

For instance, the combination of marking pattern kinematics and engraving kinematics which are determined as explained above may allow optimizing both the clusters and the number of successive laser-impacts on one or a plurality of clusters on a ring, even if the clusters are not close one to each other.

Figure 10 shows a marking 59 of a marking pattern 4 engraved thanks to the method described above, wherein the marking 59 is representative of a cluster 50 which has a continuous rounded spiral shape 52 made according to the shape illustrated in Figure 9, and with a regular pitch between at least some of laser-impacts 58.

Thanks to the method according to the disclosure, features of the marking pattern, the photo-ablation device and the ophthalmic device to be engraved are all taken into account for determining not only a global kinematics but both marking pattern kinematics and engraving kinematics.

The marking pattern kinematics may be useful to ensure a good quality of the engraved ophthalmic device, while the engraving kinematics may be useful to ensure a good productivity, both providing a very efficient engraving method.

The method according to the disclosure thus allows several optimisations of the engraving, namely a homogeneous clusters of the marking pattern engraved with low visibility whatever the geometry of the ophthalmic device and post-treatment if any, and whatever the geometry, shape and surface of the marking pattern as such; also a reduced cycle time thanks to the continuous clusters and/or to the engraving ring by ring; and also reduced constraints on the ophthalmic device and if any on optional coatings thereon due to photo-ablation technology.

It should be noted more generally that the disclosure is not limited to the examples described and represented.

## Claims

1. Method for engraving an ophthalmic device (3), comprising: providing (101) a photo-ablation device (27) configured to engrave at least one face of the ophthalmic device; providing (102) a marking pattern (4) to be engraved on the at least one face of the ophthalmic device thanks to the photo-ablation device; and determining (103) a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern.

2. Method according to claim 1, wherein the geometrical characteristics of the at least one face of the ophthalmic device (3) to be engraved is a curvature value, and/or the operational parameters of the photo-ablation device (21) are a range of power of use, a focal point (FP) and a defocus threshold (DFP), and/or the geometrical characteristics of the marking pattern (4) are a final shape, a number of laser-impacts (58) and pitch (56, 57) between the laser-impacts.

3. Method according to claim 2, wherein the at least one face of the ophthalmic device (3) is divided into a limited number of distinct at least partially annular zones (30) defined depending on the curvature value and the engraving kinematics is determined such that on each of at least partially annular zones, the photo-ablation device (27) is configured to focus at a focal point (FP), including positively and/or negatively the defocus threshold (DFP).

4. Method according to claim 3, wherein engraving kinematics is determined such that the marking pattern (4) is engraved by the photo-ablation device (27) at least partially zone by zone (30).

5. Method according to any one of claims 2 to 4, wherein the marking pattern kinematics is determined such that the marking pattern (4) comprises at least some clusters (50) which extend continuously one to each other.

6. Method according to claim 5, wherein the marking pattern kinematics is determined such that at least some part of clusters (50) are defined by a regular pitch between a determined number of laser-impacts (58).

7. Method according to any one of claims 5 and 6, wherein the engravings kinematics is determined such that the continuous clusters (50) are at least partially engraved successively in the range of power of use and/or depending on a gradient of power of use.

8. Method according to any one of claims 1 to 7, comprising: engraving (104) the marking pattern (4) thanks to the photo-ablation device (27) and according to the determined marking pattern kinematics and engraving kinematics.

9. Method according to claim 8, wherein the marking pattern (4) is engraved on a local area on the at least one face of the ophthalmic device (3) or on a major area on the at least one face of the ophthalmic device (3).

10. Method according to any one of claims 1 to 9, wherein the marking pattern (4) comprises at least one commercial marking and/or at least one decorative marking, such as a logo, and/or at least one functional marking for manufacturing the ophthalmic device (3), such as positioning circles, and/or at least one optical marking, such as micro-structures for preventing myopia.

11. Command and control unit including system elements configured to run a computer program in order to implement at least some of the following: providing (101) a photo-ablation device (27) configured to engrave at least one face of the ophthalmic device (3); providing (102) a marking pattern (4) to be engraved on the at least one face of the ophthalmic device thanks to the photo-ablation device; and determining (103) a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern.

12. Manufacturing system comprising a photo-ablation device (27) for engraving an ophthalmic device (3) and a command and control unit, the system being configured for carrying out at least the following: providing (102) a marking pattern (4) to be engraved on the at least one face of the ophthalmic device thanks to the photo-ablation device; and determining (103) a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern.

13. Manufacturing system according to claim 12, configured for carrying out engraving (104) the marking pattern (4) on the at least one face of the ophthalmic device (3).

14. Computer program including instructions configured to implement at least some of the following: providing (101) a photo-ablation device (27) configured to engrave at least one face of the ophthalmic device (3); providing (102) a marking pattern (4) to be engraved on the at least one face of the ophthalmic device thanks to the photo-ablation device; and determining (103) a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern, when the computer program is run by a computer.

15. Client-server communication interface to be used for carrying out a method for engraving an ophthalmic device (3), comprising providing (101) a photo-ablation device (27) configured to engrave at least one face of the ophthalmic device; providing (102) a marking pattern (4) to be engraved on the at least one face of the ophthalmic device thanks to the photo-ablation device; and determining (103) a kinematics to engrave the marking pattern on the at least one face of the ophthalmic device, wherein the kinematics includes a marking pattern kinematics and an engraving kinematics, both being defined as a function of at least one parameter amongst geometrical characteristics of the at least one face of the ophthalmic device to be engraved, operational parameters of the photo-ablation device, and geometrical characteristics of the marking pattern; the client-server communication interface being configured for transferring to a remote computer at least some data, such as a marking pattern kinematics and an engraving kinematics determined, which are determined by a computer program that implements at least some steps of the method, when the computer program is run in a command and control unit, the remote computer implementing the other steps the method.
